# EUROPÄISCHE PATENTSCHRIFT

(11) **EP 4 178 723 B1**
(45) Veröffentlichungstag und Bekanntmachung des Hinweises auf die Patenterteilung: **02.09.2026**
(21) Anmeldenummer: 21748529.1
(22) Anmeldetag: 09.07.2021
(51) Int. Cl.: B01L 9/00, B01L 3/02, G01N 35/10, G06T 7/73

(54) **VERFAHREN ZUR ERMITTLUNG EINER ABSOLUTKOORDINATE FÜR EIN ZIEL-WELL EINER MULTIWELLPLATTE SOWIE ADRESSIERUNGSEINRICHTUNG**
METHOD FOR DETERMINING AN ABSOLUTE COORDINATE FOR A TARGET WELL OF A MULTI-WELL PLATE, AND ADDRESSING DEVICE
PROCÉDÉ DE DÉTERMINATION D'UNE COORDONNÉE ABSOLUE POUR UN PUITS CIBLE D'UNE PLAQUE À PUITS MULTIPLES ET DISPOSITIF D'ADRESSAGE

(30) Priorität: 13.07.2020 DE 102020208740
(43) Veröffentlichungstag der Anmeldung: 17.05.2023
(73) Patentinhaber: Fraunhofer-Gesellschaft zur Förderung der angewandten Forschung e.V., 80686 München (DE)
(72) Erfinder: PFEIFER, Michael, 70199 Stuttgart (DE)
(74) Vertreter: Kordel, Mattias
(86) Internationale Anmeldenummer: PCT/EP2021/069194
(87) Internationale Veröffentlichungsnummer: WO 2022/013106

(56) Entgegenhaltungen:
- EP-A1- 3 154 698
- WO-A1-2015/172971
- WO-A1-2018/088460

## Beschreibung

Die Erfindung betrifft ein Verfahren zur Ermittlung einer Absolutkoordinate für ein Ziel-Well einer Multiwellplatte sowie eine Adressierungseinrichtung.

Beim Pipettieren werden kleine Flüssigkeitsmengen, wie beispielsweise Medien, Chemikalien oder biologische Proben, in Multiwellplatten - manchmal auch als Mikrotiterplatten bezeichnet - eingefügt beziehungsweise entnommen. Dieser Prozess findet gewöhnlicherweise mit handgeführten Dosierpipetten statt, deren Volumen üblicherweise im Bereich zwischen 1 µl bis 1 ml liegt. Die Multiwellplatten haben zumeist 96, 384 oder 1536 Wells, in welche unabhängig voneinander einzeln pipettiert werden kann. Das manuelle Pipettieren mit einer Dosierpipette ist ein Vorgang, welcher höchste Präzision erfordert, weswegen dieser üblicherweise nur von geschultem Personal durchgeführt wird. Eine Dokumentation der Pipettiervorgänge muss hierbei händisch entweder in ein Laborbuch geschrieben oder in eine entsprechend eingerichtete Laborsoftware manuell eingegeben werden. Eine Kontrolle, ob einzelne Pipettiervorgänge korrekt ausgeführt wurden, liegt, wenn es keine zusätzliche Methodik, wie beispielsweise ein Einfärben der Proben, gibt, allein beim Benutzer und/oder Bediener der Dosierpipette. Eine Fehlergefahr ergibt sich insbesondere auch beim Arbeiten auf kleinstem Raum, da es beim Durchführen von sich stark ähnelnden Pipettiervorgängen und beispielsweise einer Unterbrechung im Arbeitsablauf durch einen Kollegen, keine übergeordnete Kontrolle gibt. Insofern liegt auch bei sehr hoher Konzentration eines Benutzers eine entsprechende Fehlergefahr vor, wenn dieser in seiner Arbeit unterbrochen wird.

Eine Automatisierung mittels Pipettierautomaten erfordert aktuell noch ein sehr hohes Maß an Vorbereitung und Kalibrierung, um die Position der Multiwellplatten anzusteuern. Eine Erkennung der Ist-Position einer Spitze einer Dosierpipette in Bezug zu einer Multiwellplatte ermöglicht zwar ein flexibles System zum schnelleren Automatisieren von Pipettieraufgaben, jedoch sind die entsprechenden Pipettierautomaten mit einem hohen Investitionsbedarf verbunden.

Aus der europäischen Patentschrift EP 3 154 698 B1 ist eine Pipette bekannt, umfassend einen Zylinder mit einem Kolben, welcher innerhalb des Zylinders zum Ansaugen und Abgeben von Flüssigkeiten beweglich gelagert ist, und einen Griffabschnitt zum Greifen der Pipette, wobei die Pipette ferner ein Abbildungsvorrichtungselement zum Erhalt von Bildern umfasst, die die Verwendung der Pipette unterstützen. Es verbleibt jedoch das Problem, dass die Pipette und die dazugehörige Vorrichtung komplex aufgebaut und entsprechend teuer in der Anschaffung sowie bei der Verwendung der Vorrichtung eine Anordnung der Multiwellplatten auf einer eigens dafür vorgesehenen Oberfläche notwendig ist.

Aus WO 2018/088460 A1 ist ein System zur Erfassung von Well-Adressen einer Multiwellplatte bekannt. Aus EP 3 154 698 A1 geht eine Pipette hervor, die ein Bildgebungselement zum Erhalten von Bildern umfasst. Aus WO 2015/172971 A1 geht ein Verfahren zum Feststellen der Anwesenheit oder Abwesenheit von Wegwerfpipettenspitzen in Pipettenspitzenträgern hervor.

Es besteht somit ein Bedarf, eine Dosierpipette beziehungsweise ein Verfahren und eine Vorrichtung für eine Dosierpipette bereitzustellen, mit welcher auf einfache Art und Weise eine Nachverfolgung von Pipettiervorgängen möglich ist. Zudem wäre es vorteilhaft, wenn diese einfach zu handhaben und zudem kostengünstig wäre. Ferner wäre es vorteilhaft, wenn mit der Vorrichtung auch handelsübliche, händisch geführte Dosierpipetten nachgerüstet werden könnten.

Der Erfindung liegt daher die Aufgabe zugrunde, ein Verfahren zur Ermittlung einer Absolutkoordinate für ein Ziel-Well einer Multiwellplatte sowie eine Adressierungseinrichtung zu schaffen, wobei die genannten Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen und Ausführungsbeispiele.

Die Aufgabe wird insbesondere gelöst, indem ein Verfahren zur Ermittlung einer Absolutkoordinate für ein Ziel-Well einer Multiwellplatte zur Durchführung eines Pipettiervorgangs in das Ziel-Well unter Verwendung einer Dosierpipette geschaffen wird, wobei das Ziel-Well dasjenige Well der Multiwellplatte ist, welches zum Zeitpunkt des mit der Dosierpipette durchgeführten Pipettiervorgangs einer Dosierpipettenspitze der Dosierpipette am nächsten liegt, wobei an der Dosierpipette ein optischer Sensor zur Aufnahme, insbesondere Erfassung, eines insbesondere die Dosierpipettenspitze darstellenden Bildstroms angeordnet ist, in der Art, dass in dem Bildstrom eine Umgebung der Dosierpipettenspitze einschließlich der Dosierpipettenspitze abgebildet wird, wobei der Bildstrom auf eine Abbildung eines Bereichs der Multiwellplatte in dem Bildstrom ausgewertet wird, und wobei die folgenden Verfahrensschritte ausgeführt werden, wenn in dem Bildstrom die Abbildung eines Bereichs der Multiwellplatte erkannt wird:
a) Erkennen von mindestens drei, vorzugsweise acht, Wells der Multiwellplatte in dem abgebildeten Bereich der Multiwellplatte, insbesondere in einem einzelnen Bild des Bildstroms,
b) Erstellen eines Modells der Multiwellplatte auf der Grundlage der in Schritt a) erkannten Wells und Ermitteln der Absolutkoordinate des Ziel-Wells auf der Grundlage des Modells, wobei das Modell der Multiwellplatte erstellt wird, indem:
   b1) insbesondere ausgehend von den erkannten Wells - vorzugsweise anhand eines insbesondere vorbestimmten oder vorgebbaren Abstandsmerkmals unter Anwendung eines insbesondere vorbestimmten oder vorgebbaren Gittermerkmals - ein Wellgitter auf die erkannten Wells angewendet und vorzugsweise über die erkannten Wells hinaus erweitert wird, woraus das Modell erhalten wird, wobei als Wellgitter ein relatives Wellgitter des Modells der Multiwellplatte angewendet wird, wobei zur Bestimmung des relativen Wellgitters benötigte relative 2D-Koordinaten der gemäß Verfahrensschritt a) erkannten Wells mittels relativer Koordinaten von benachbarten regelmäßigen Merkmalen bestimmt werden, und/oder
   b2) die erkannten Wells mit einer Mehrzahl von Layouts von bekannten und/oder vorgebbaren Multiwellplatten verglichen werden, wobei dasjenige Layout der Mehrzahl von Layouts als ausgewähltes Layout ausgewählt wird, welches die höchste Übereinstimmung mit den erkannten Wells aufweist, wobei das Modell aus dem ausgewählten Layout erhalten wird.

In Zusammenhang mit der vorliegenden Erfindung soll unter einem Bildstrom ein Bildstrom von Einzelbildern eines optischen Sensors, insbesondere einer Kamera, verstanden werden, wobei der Bildstrom vorzugsweise eine Einzelbild-Frequenz von 24 Hz aufweist. Mit dem Begriff Bildstrom können aber in Zusammenhang mit der vorliegenden Erfindung auch die einzelnen Bilder oder Gruppen von Bildern des Bildstroms des optischen Sensors, insbesondere der Kamera, angesprochen sein.

Es ist in bevorzugter Ausgestaltung möglich, dass nach dem Verfahrensschritt a) in einem Verfahrensschritt a1) von den erkannten Wells gemäß Verfahrensschritt a) eine Teilmenge, vorzugsweise mindestens drei, ausgewählt werden, welche im Anschluss als erkannte und ausgewählte Wells in den weiteren Verfahrensschritten, insbesondere in Verfahrensschritt b), insbesondere in den Verfahrensschritte b1) und b2), anstelle der erkannten Wells verwendet werden.

Unter einem Abstandsmerkmal wird hier insbesondere ein Merkmal verstanden, welches einen Abstand zwischen einander unmittelbar benachbarten Wells charakterisiert oder bestimmt. Insbesondere kann das Abstandsmerkmal ein Abstand zwischen einander unmittelbar benachbarten Wells sein. Insbesondere kann das Abstandsmerkmal ein geringster erfasster Wellabstand und/oder ein mit größter Häufigkeit erfasster Wellabstand sein. Werden in einem Bild des Bildstroms Wells erkannt, können Abstände zwischen den Mittelpunkten der Wells ermittelt werden. Dabei werden eine Vielzahl verschiedener Abstände erkannt, beispielsweise Abstände von in verschiedenen Richtungen einander unmittelbar benachbarten Wells, aber auch Abstände zwischen Wells, die einander nicht unmittelbar benachbart sind, wobei andere Wells dazwischen angeordnet sind. Ein geringster erfasster Abstand kann als charakteristischer Abstand zwischen einander entlang einer Basisrichtung der Multiwellplatte - insbesondere entlang einer Reihe oder Spalte - unmittelbar benachbarten Wells verstanden werden. Es ist außerdem auch zu erwarten, dass ein solcher Abstand zwischen einander unmittelbar entlang einer Basisrichtung benachbarten Wells mit größter Häufigkeit erfasst wird, sodass auch der mit größter Häufigkeit erfasste Abstand als charakteristischer Abstand verwendet werden kann. Das Abstandsmerkmal ist also in bevorzugter Ausgestaltung ein solcher charakteristischer Abstand.

Unter einem Gittermerkmal wird insbesondere ein Merkmal verstanden, welches charakteristisch oder bestimmend ist für ein Gitter, welches die Lage der Wells auf der Multiwellplatte charakterisiert. Ein solches Gittermerkmal ist in bevorzugter Ausgestaltung ein Basisvektor, oder ein Paar von nicht-kollinear zueinander angeordneten, vorzugsweise orthogonalen Basisvektoren des Gitters. Bevorzugt werden die Basisvektoren aus dem Abstandsmerkmal erhalten, insbesondere als charakteristische Abstände von entlang den das Gitter aufspannenden Bassrichtungen einander unmittelbar benachbarten Wells.

Unter einem Layout einer Multiwellplatte wird hier insbesondere die spezifische Ausgestaltung der Multiwellplatte, insbesondere die Größe, Form, und Anzahl von Reihen und Spalten auf der Multiwellplatte angeordneter Wells verstanden. Eine Mehrzahl solcher Layouts bekannter Multiwellplatten kann insbesondere in einer Datenbank hinterlegt sein, wobei auf diese Layouts zur Durchführung des hier vorgeschlagenen Verfahren zurückgegriffen werden kann.

Das Verfahren zur Ermittlung einer Absolutkoordinate für ein Ziel-Well einer Multiwellplatte kann insbesondere im Rahmen von übergeordneten Verfahren, insbesondere Verfahrenskomplexen, wie beispielsweise der Protokollierung einer Pipettieraufgabe, der Erstellung und/oder Abarbeitung einer Rezeptur, welche eine vorgegebene Reihenfolge von verschiedenen Pipettieraufgaben enthält, vorgesehen sein.

Insbesondere ist bevorzugt vorgesehen, dass die mit der Dosierpipettenspitze angefahrenen oder angesteuerten Ziel-Wells, das heißt insbesondere diejenigen Wells, auf welche die Dosierpipettenspitze mindestens für eine parametrierbare Zeitdauer zeigt, protokolliert werden.

Des Weiteren ist es bevorzugt vorgesehen, dass im Rahmen eines übergeordneten Verfahrens vorzugsweise auch ein Pipettiervorgang gesperrt werden kann, falls mit dem vorliegenden Verfahren ein falsches Well erkannt wird, in welches versehentlich versucht wird zu pipettieren.

Dem gegenüber ist es aber auch möglich, dass in einem übergeordneten Verfahren ein Pipettiervorgang freigegeben wird, wenn die Dosierpipettenspitze über einem Ziel-Well positioniert wurde, welches als richtiges Well mit dem vorliegenden Verfahren erkannt wurde. Hierdurch wird es insbesondere möglich, dass auf einfache Art und Weise und insbesondere reproduzierbar, Pipettieraufgaben ausgeführt werden können. Zudem wird eine teilweise monotone und sehr ermüdende Pipettierarbeit im Nachhinein nachvollziehbar, sodass - falls Fehler aufgetreten sind - die Ursache im Nachhinein noch aufgeklärt werden kann. Insbesondere forensische Untersuchungen, bei welchen keine Fehler vorkommen dürfen, wenn auf Ergebnisse solcher forensischer Untersuchungen beispielsweise Strafurteile eines Gerichts beruhen, können unter Anwendung des hier vorgeschlagenen Verfahrens präzise dokumentiert und im Anschluss nachvollzogen und/oder auf Fehlerfreiheit geprüft werden.

In diesem Zusammenhang ist es bevorzugt vorgesehen, dass der mit dem optischen Sensor erfasste Bildstrom oder die Einzelbilder aus dem Bildstrom zusätzlich zu der Speicherung des erkannten Wells ebenfalls - zur Dokumentation - gespeichert werden.

Zudem ist es möglich, dass mittels einer entsprechenden Vorrichtung, wie beispielsweise einem Schwingungserreger, welcher der Dosierpipette zugeordnet ist, ein Benutzer der Dosierpipette zu einem Ziel-Well, welches vorher vorgegeben wurde, geleitet wird, in der Art, dass beispielsweise die Schwingungsfrequenz und/oder -amplitude erniedrigt wird, insbesondere auf null reduziert wird, wenn die Dosierpipette über dem richtigen Well platziert wurde.

Ferner ist bevorzugt vorgesehen, dass die im Verfahren verwendeten Multiwellplatte keine besonderen Merkmale aufweisen, mit welchen ein Well insbesondere automatisiert erkannt und/oder identifiziert werden kann. Hiermit sind insbesondere Strichcodes oder anderweitige Markierungen angesprochen, welche dabei helfen eine Multiwellplatte, insbesondere ein Well auf der Multiwellplatte, zu erkennen und/oder identifizieren.

Im Übrigen ist bevorzugt vorgesehen, dass es sich bei der Dosierpipette um eine handgeführte Pipette handelt. Mit anderen Worten ist insbesondere vorgesehen, dass es sich um keine maschinenbewegte Dosierpipette handelt.

Alternativ oder zusätzlich ist es bevorzugt vorgesehen, dass das Verfahren gemäß der Erfindung auch in einem Pipettierautomaten, insbesondere Pipettierroboter, mit insbesondere achsgeführten Dosierpipetten, Anwendung findet.

Besonders bevorzugt wird das Verfahren gemäß der Erfindung zur automatischen Dokumentation von Pipettierungen angewendet. Hierbei kann das Verfahren genutzt werden, um während eines Aufzeichnungsmodus einer Software die angesteuerten Wells zu erkennen. Hierbei wird insbesondere während des Verfahrens laufend die Information gespeichert, welche Arbeitsschritte mit der Dosierpipette durchgeführt werden. Wenn eine Erkennung des Wells beim Aspirieren beziehungsweise Dispensieren nicht möglich ist, wird ein Eintrag mit leeren Koordinaten vorgenommen. Eine derart erhaltene Dokumentation kann per Software oder per zusätzlichem Signal, insbesondere Taster und/oder Betätigungsknopf und/oder Trigger, unterbrochen oder beendet werden. Die erfassten Daten werden dabei gespeichert, vorzugsweise auf der Auswertevorrichtung.

Zudem ist eine Verfahrensweise denkbar, bei welcher eine automatische Fehler(Früh)-Erkennung und eine aktive Warnung vor beinahe falsch durchgeführten Pipettierungen ermöglicht werden. In einer solchen Betriebsart kann die Dosierpipette ein hinterlegtes Protokoll für eine Abfolge von Pipettierungen mit den durch einen Benutzer der Dosierpipette ausgeführten Pipettierungen vergleichen, sodass ein Benutzer der Dosierpipette genau angezeigt bekommt, welche Schritte er als nächstes mit der Dosierpipette ausführen soll. Dabei können Abweichungen vom Protokoll festgestellt und gegebenenfalls eine Warnmeldung, insbesondere mittels einer der Auswertevorrichtung zugeordneten Ausgabevorrichtung, vorzugsweise akustisch und/oder visuell, ausgegeben werden. Der Benutzer wird dabei aufgefordert, die Abweichung vom Protokoll zu korrigieren und kann dann im Protokoll fortfahren. Die erfassten Daten werden dabei gespeichert. Zudem kann kontinuierlich ausgewertet werden, bei welchem Well sich die Pipettenspitze befindet, sodass frühzeitig eine Warnung stattfinden kann, bevor eine falsche Pipettierung ausgeführt wird, gegebenenfalls mittels des weiter oben erwähnten Schwingungserregers.

Zudem ist eine Betriebsart denkbar, bei welcher ein Aspirieren beziehungsweise Dispensieren mittels der Dosierpipette erst nach erfolgreicher Erkennung und Überprüfung, dass es sich um das richtige Ziel-Well handelt, ausgeführt werden kann. Falls nicht das richtige Ziel-Well erkannt wird, könne insbesondere die Dosierpipette beziehungsweise die Adressierungseinrichtung derart ausgestaltet sein, dass ein Pipettieren, das heißt insbesondere ein Aspirieren oder Dispensieren, nicht möglich, insbesondere gesperrt ist. Zudem ist es denkbar, dass bei einem Pipettierautomaten unabhängig von einer sonstigen Steuerung eine Kennung der Wells unabhängig vom Pipettierautomat ermittelt und entsprechend gespeichert wird. Hierdurch kann insbesondere unabhängig von dem Pipettierautomaten festgestellt werden, ob eine fehlerfreie Funktion gegeben ist, das heißt insbesondere die korrekten Wells bearbeitet wurden. Zudem sind entsprechende Kalibrierungs- beziehungsweise Verifizierungs- beziehungsweise Plausibilisierungsfunktionen denkbar.

Gemäß einer Weiterbildung der Erfindung ist vorgesehen, dass der Bildstrom des optischen Sensors, insbesondere der Kamera, mittels Gaußschem Weichzeichner (Gaussian Blur) vorbearbeitet wird, wobei insbesondere das Bildrauschen reduziert wird. Hierdurch kann insbesondere erzielt werden, dass auf einfache Art und Weise und mittels eines gängigen und erprobten Algorithmus ein zur Auswertung besser geeigneter Bildstrom erhalten werden kann.

Alternativ oder zusätzlich ist es möglich, dass der Bildstrom, insbesondere einzelne Bilder des Bildstroms oder der gesamte Bildstrom, aufgehellt wird, vorzugsweise durch eine Offset- und/oder Skalierungsoperation.

Gemäß einer Weiterbildung der Erfindung ist vorgesehen, dass zur Erkennung der Wells der Multiwellplatte gemäß Verfahrensschritt a) eine Kantenerkennung zur Erkennung von regelmäßigen Merkmalen ausgeführt wird, wobei vorzugsweise eine Bestimmung von Parametern der Kantenerkennung auf einem Median der Grauwerte des erfassten Bildstroms, insbesondere des Bereichs der Multiwellplatte im Bildstrom, basiert, wobei vorzugsweise die Kantenerkennung mit einem Canny-Algorithmus ausgeführt wird und anschließend vorzugsweise ein Verstärken der Kanten - manchmal auch als Dilatieren bezeichnet - durchgeführt wird. Mittels der Kantenerkennung und vorzugsweise mit einem auf einem Median der Grauwerte des erfassten Bildstroms basierenden Parametern für die Kantenerkennung kann auf einfache Art und Weise eine verbesserte und robustere Erkennung von regelmäßigen Merkmalen erzielt werden.

Gemäß einer Weiterbildung der Erfindung ist vorgesehen, dass zur Erkennung der Wells der Multiwellplatte gemäß Verfahrensschritt a) eine Hough-Transformation ausgeführt wird, vorzugsweise zur Identifizierung von kreisförmigen Merkmalen, insbesondere zur Erkennung von kreisförmigen Wells. Insbesondere die Verwendung der Hough-Transformation hat sich als besonders vorteilhaft bei der Erkennung von kreisförmigen Wells im Bildstrom erwiesen.

Gemäß einer Weiterbildung der Erfindung ist vorgesehen, dass in Verfahrensschritt b1) beim Ermitteln des Modells der Multiwellplatte ein Detektieren von Multiwellplattenkanten in einem Multiwellplattenkantenbereich der Multiwellplatte im Bildstrom ausgeführt wird, wobei der Multiwellplattenkantenbereich in einem vorgebbaren Bereich oder in einem vorgebbaren Multiwellplattenkantenabstand zu den äußersten Wells des Modells der Multiwellplatte liegt. Vorzugsweise entspricht der Multiwellplattenkantenabstand einem geringsten und/oder mit der höchsten Häufigkeit erfassten Wellabstand zwischen den gemäß Verfahrensschritt a) erkannten Wells oder einem Wellabstand zwischen Wells eines Layouts der Mehrzahl der Layouts gemäß Verfahrensschritt b2). Insbesondere die Anwendung des geringsten Wellabstands mit der höchsten Häufigkeit oder des Wellabstands zwischen Wells eines Layouts der Mehrzahl der Layouts ergibt auf einfache Art und Weise ein Merkmal beziehungsweise Kriterium, um ausgehend von den bisher erkannten Wells einen Bereich zu definieren, in welchem Kanten der Multiwellplatte zu erwarten sind. Dies führt zu einer erheblichen Verbesserung der Erkennungsqualität wie auch einer deutlich effizienteren Auslastung der zur Verfügung stehenden Rechenkapazität. Mit anderen Worten wird das Verfahren hierdurch deutlich recheneffizienter ausgestaltet.

Gemäß einer Weiterbildung der Erfindung ist vorgesehen, dass in Schritt b1) die zur Bestimmung des relativen Wellgitters benötigten relativen 2D-Koordinaten durch eine rekursive Bestimmung mittels der relativen Koordinaten der - insbesondere bekannten - benachbarten regelmäßigen Merkmale, insbesondere Nachbarwells des Ziel-Wells, bestimmt, vorzugsweise verwendet, werden. Durch die Orientierung an benachbarten regelmäßigen Merkmalen, wie insbesondere Nachbarwells, wird insbesondere die Effizienz des Verfahrens erheblich gesteigert, wobei zudem auch Fehler vermieden werden können.

Gemäß einer Weiterbildung der Erfindung ist vorgesehen, dass in Schritt b2) bei einer Bestimmung eines relativen Wellgitters des Modells der Multiwellplatte, insbesondere des ausgewählten Layouts der Mehrzahl an Layouts, ein Multiwellplattenkantenbereich der Multiwellplatte dadurch erhalten wird, dass der Multiwellplattenkantenbereich ausgehend von geradlinigen Reihen von außenliegenden Wells, welche entweder auf erkannten Wells gemäß Verfahrensschritt a) und/oder auf durch Erweiterung des Modells erhaltenem Wells beruht, um einen zugehörigen Basisvektor nach außen bezüglich der Multiwellplatte verschoben wird, wobei eine - tatsächliche - Kante der Multiwellplatte dadurch erhalten wird, dass insbesondere geprüft wird, ob in dem Multiwellplattenkantenbereich in dem Bildstrom des optischen Sensors - tatsächlich - eine Kante erkannt werden kann, und wobei vorzugsweise der zugehörige Basisvektor auf der Basis eines geringsten und/oder mit der höchsten Häufigkeit erfassten Wellabstandes zwischen den gemäß Verfahrensschritt a) erkannten Wells oder auf der Basis eines Wellabstandes eines ausgewählten Layouts der Mehrzahl der Layouts gemäß Verfahrensschritt b2) beruht. Durch die Erkennung von Kanten, insbesondere den Kanten der Multiwellplatte, kann zusätzlich auf einfache Art und Weise eine Verifizierung und/oder Plausibilisierung der durch das Verfahren erhaltenen Ergebnisse erzielt werden.

Die Aufgabe wird insbesondere auch gelöst, indem eine Adressierungseinrichtung für eine insbesondere handgeführte Dosierpipette mit einer Dosierpipettenspitze geschaffen wird, aufweisend einen Grundkörper mit einer - vorzugsweise zweigeteilten - Dosierpipettenaufnahmevorrichtung, welche dazu eingerichtet ist, in einer Betriebsstellung mit einer Dosierpipette verbunden zu werden, wobei der Grundkörper eine Kommunikationsvorrichtung sowie einen optischen Sensor aufweist, wobei die Kommunikationsvorrichtung mit dem optischen Sensor in Wirkverbindung steht, wobei ein Fokus und/oder ein Sichtfeld des optischen Sensors in der Betriebsstellung auf die Spitze, insbesondere die Pipettenspitze, der Dosierpipette fokussiert und/oder gerichtet ist, wobei die Adressierungseinrichtung eine - vorzugsweise automatische, insbesondere programmierte - Auswertevorrichtung aufweist, welche mit der Kommunikationsvorrichtung in Wirkverbindung steht, wobei die Auswertevorrichtung dazu eingerichtet ist, vorzugsweise autonom und/oder automatisch, das heißt insbesondere ohne Auslösung durch einen Benutzer, ein Verfahren gemäß der Erfindung oder ein Verfahren gemäß einer der zuvor genannten Ausführungsformen durchzuführen. In Zusammenhang mit der Adressierungseinrichtung werden insbesondere die Vorteile verwirklicht, die schon in Zusammenhang mit dem Verfahren zur Ermittlung einer Absolutkoordinate für ein Ziel-Well einer Multiwellplatte erläutert wurden.

Unter einer Einrichtung, hier insbesondere der Adressierungseinrichtung, wird im Rahmen der vorliegenden technischen Lehre insbesondere eine Vorrichtung oder ein System verstanden, die/das eine Mehrzahl weiterer Vorrichtungen, hier insbesondere den Grundkörper, die Dosierpipettenaufnahmevorrichtung, die Kommunikationsvorrichtung, den optischen Sensor und erfindungsgemäß die Auswertevorrichtung, aufweist.

Besonders bevorzugt wird das Verfahren auf der Auswertevorrichtung ausgeführt, welche insbesondere als PC und vorzugsweise unabhängig von dem Grundkörper ausgebildet ist. Alternativ ist bevorzugt vorgesehen, dass die Auswertevorrichtung dem Grundkörper zugeordnet oder als Kommunikationsvorrichtung ausgebildet ist. Dies bedeutet insbesondere, dass die Kommunikationsvorrichtung auch die Funktion der Auswertevorrichtung übernehmen kann. Mit anderen Worten ist die Kommunikationsvorrichtung zusätzlich dazu eingerichtet, das Verfahren zur Ermittlung einer Absolutkoordinate für ein Ziel-Well einer Multiwellplatte auszuführen.

Gemäß einer Weiterbildung der Erfindung ist vorgesehen, dass die Auswertevorrichtung dem Grundkörper zugeordnet ist, insbesondere an dem Grundkörper angeordnet oder in dem Grundkörper integriert ist.

Der optische Sensor ist bevorzugt ausgewählt aus einer Gruppe bestehend, aus einer Kamera, insbesondere einer optischen Kamera, einer Wärmebildkamera, und einer NIR-Kamera (Nahinfrarot-Kamera).

Die Erfindung wird im Folgenden anhand der Zeichnung näher erläutert.

Dabei zeigt:
- Figur 1: in einer schematischen Darstellung einen Ablaufplan einer Ausführungsform des Verfahrens zur Ermittlung einer Absolutkoordinate für ein Ziel-Well einer Multiwellplatte,
- Figur 2: in einer schematischen Darstellung ein Ausführungsbeispiel der Adressierungseinrichtung, insbesondere eines Grundkörpers der Adressierungseinrichtung,
- Figur 3: in einer schematischen Darstellung ein Einzelbild des Bildstroms des optischen Sensors,
- Figur 4: in einer schematischen Darstellung das Einzelbild des Bildstroms des optischen Sensors aus Figur 3, wobei Wells gemäß Verfahrensschritt a) erkannt wurden,
- Figur 5: in einer schematischen Darstellung das Einzelbild des Bildstroms des optischen Sensors gemäß Figur 3 oder 4, wobei ein Basisvektor gemäß Verfahrensschritt b), insbesondere Verfahrensschritt b1), gezeigt ist,
- Figur 6: in einer schematischen Darstellung das Einzelbild des Bildstroms des optischen Sensors gemäß Figur 3, 4 oder 5, wobei eine Kantenerkennung in Verfahrensschritt b1) oder b2) ausgeführt wurde,
- Figur 7: in einer schematischen Darstellung das Einzelbild des Bildstroms des optischen Sensors gemäß einer der Figuren 3, 4, 5 und 6, wobei gemäß Verfahrensschritt b) eine Absolutkoordinate des Ziel-Wells ermittelt wurde,
- Figur 8: in einer schematischen Darstellung das Einzelbild des Bildstroms des optischen Sensors gemäß Figur 7, wobei gezeigt ist, dass das Verfahren auch bei einer nur teilweise abgebildeten Multiwellplatte ausgeführt werden kann,

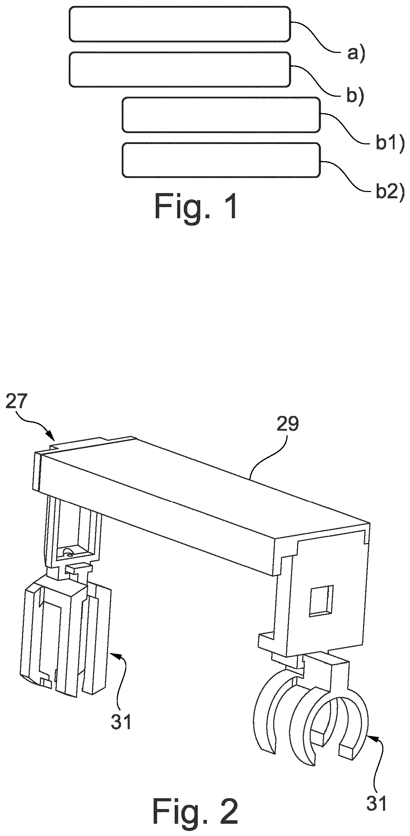

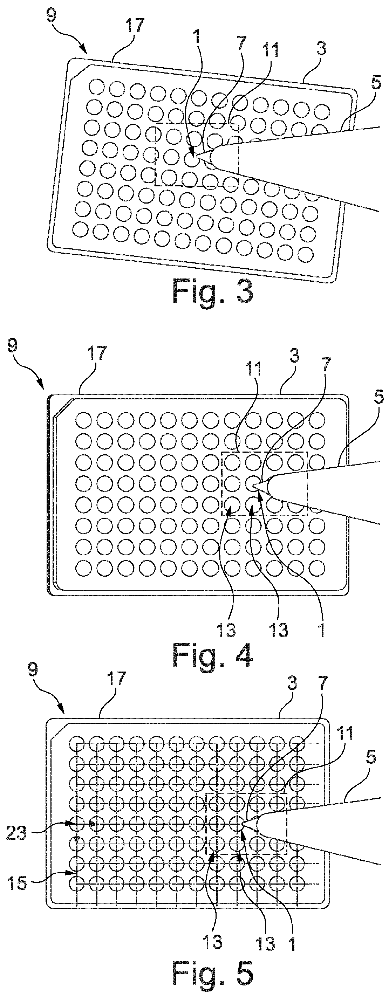

**Fig.** 1 ist in einer schematischen Darstellung ein Ablaufplan einer Ausführungsform des Verfahrens zur Ermittlung einer Absolutkoordinate für ein Ziel-Well 1 einer Multiwellplatte 3 zur Durchführung eines Pipettiervorgangs in das Ziel-Well 1 unter Verwendung einer Dosierpipette 5 zu entnehmen, wobei das Ziel-Well 1 dasjenige Well der Multiwellplatte 3 ist, welches einer Dosierpipettenspitze 7 der Dosierpipette 5 am nächsten liegt, wobei an der Dosierpipette 5 ein optischer Sensor (in den Figuren nicht gezeigt) zur Aufnahme eines Bildstroms 9 der Dosierpipettenspitze 7 angeordnet ist, in der Art, dass in dem Bildstrom 9 die Dosierpipettenspitze 7 abgebildet wird (vergleiche insbesondere Fig. 3), wobei der Bildstrom 9 auf eine Abbildung eines Bereichs 11 der Multiwellplatte 3 in dem Bildstrom ausgewertet wird, und wobei die folgenden Verfahrensschritte ausgeführt werden, wenn in dem Bildstrom 9 die Abbildung eines Bereichs 11 der Multiwellplatte 3 erkannt wird:
a) Erkennen von mindestens drei, vorzugsweise acht, Wells 13 der Multiwellplatte 3 in dem abgebildeten Bereich 11 der Multiwellplatte 3. Dieser Verfahrensschritt ist insbesondere der Fig. 4 zu entnehmen. Zur besseren Übersicht sind lediglich zwei der erkannten Wells 13 in Figur 4, aber auch in den Figuren 5 bis 8, mit einem Bezugszeichen bezeichnet.

Zudem ist den Figuren 3 bis 8 der Bereich 11 der Multiwellplatte 3 zu entnehmen, welcher in dem Bildstrom 9 abgebildet und/oder eingezeichnet ist. Der Bereich 11 der Multiwellplatte 3 ist vorzugsweise um eine Pipettenspitze 7 der Dosierpipette 5 angeordnet, kann jedoch auch in einem übrigen Bereich der Multiwellplatte 3 platziert sein. Insofern ist in den Figuren 3 bis 8 der Bereich 11 der Multiwellplatte 3 nur beispielsweise im Bereich der Dosierpipettenspitze 7 angeordnet gezeigt.

Fig. 2 ist eine Adressierungseinrichtung 27 für eine insbesondere handgeführte Dosierpipette 5 mit einer Dosierpipettenspitze 7 zu entnehmen, aufweisend einen Grundkörper 29 mit einer, vorzugsweise zweigeteilten, Dosierpipettenaufnahmevorrichtung 31, welche dazu eingerichtet ist, in einer Betriebsstellung mit einer Dosierpipette 5 (in Figur 2 nicht gezeigt) verbunden zu werden, wobei der Grundkörper 29 eine Kommunikationsvorrichtung (in den Figuren nicht gezeigt) sowie einen optischen Sensor (in den Figuren nicht gezeigt) aufweist, wobei die Kommunikationsvorrichtung mit dem optischen Sensor in Wirkverbindung steht, wobei ein Fokus und/oder ein Sichtfeld des optischen Sensors in der Betriebsstellung auf die Dosierpipettenspitze 7 der Dosierpipette 5 fokussiert und/oder gerichtet ist, wobei der Adressierungseinrichtung 27 eine Auswertevorrichtung (in den Figuren nicht gezeigt) zugeordnet ist, welche mit der Kommunikationsvorrichtung in Wirkverbindung steht, wobei die Auswertevorrichtung dazu eingerichtet ist, ein Verfahren gemäß der Erfindung durchzuführen.

Besonders bevorzugt ist dabei vorgesehen, dass die Auswertevorrichtung dem Grundkörper 29 zugeordnet ist.

Bevor ein Erkennen von mindestens drei, vorzugsweise acht, Wells 13 der Multiwellplatte 3 gemäß Verfahrensschritt a) ausgeführt werden kann, wird vorzugsweise die Wirkverbindung zwischen der Kommunikationsvorrichtung und dem optischen Sensor sowie eine Wirkverbindung zwischen der Auswertevorrichtung und der Kommunikationsvorrichtung hergestellt.

Die Aufnahme des Bildstroms 9 erfolgt vorzugsweise mit spezifischen Kameraparametern und wird anschließend mittels der genannten Wirkverbindungen von dem optischen Sensor über die Kommunikationsvorrichtung zur Auswertevorrichtung übertragen, wobei dies entweder kontinuierlich oder als Einzelbild, vorzugsweise bei einem Auslösesignal, erfolgt.

Ein Auslösesignal kann insbesondere durch ein an dem Betätigungsknopf (in den Figuren nicht gezeigt) der Dosierpipette ermittelt werden, vorzugsweise mit einem druckelastischen Element.

Mit anderen Worten wird jedes Mal wenn der Betätigungsknopf der Dosierpipette aktuiert wird, ein Auslösesignal ausgelöst. Zu diesem Zeitpunkt oder einem vorgebbaren Zeitpunkt wird der Bildstrom, beziehungsweise ein Einzelbild des Bildstroms, gespeichert, vorzugsweise auf der Auswertevorrichtung.

Der Figur 1 ist weiterhin gemäß einem Schritt b) ein Erstellen eines Modells der Multiwellplatte 3 auf der Grundlage der in Schritt a) erkannten Wells 13 und Ermitteln der Absolutkoordinate des Ziel-Wells 1 auf der Grundlage des Modells zu entnehmen, wobei das Modell der Multiwellplatte 3 erstellt wird, indem:
b1) insbesondere ausgehend von den erkannten Wells 13 - vorzugsweise anhand eines insbesondere vorbestimmten oder vorgebbaren Abstandsmerkmals unter Anwendung eines insbesondere vorbestimmten oder vorgebbaren Gittermerkmals - ein Wellgitter 15 auf die erkannten Wells 13 angewendet und vorzugsweise über die erkannten Wells 13 hinaus erweitert wird, woraus das Modell erhalten wird, wobei als Wellgitter 15 ein relatives Wellgitter des Modells der Multiwellplatte 3 angewendet wird, wobei zur Bestimmung des relativen Wellgitters benötigte relative 2D-Koordinaten der gemäß Verfahrensschritt a) erkannten Wells 13 mittels relativer Koordinaten von benachbarten regelmäßigen Merkmalen, insbesondere Nachbar-Wells des Ziel-Wells, bestimmt werden, und/oder
b2) die erkannten Wells 13 mit einer Mehrzahl von Layouts von bekannten und/oder vorgebbaren Multiwellplatten verglichen werden, wobei dasjenige Layout der Mehrzahl von Layouts als ausgewähltes Layout ausgewählt wird, welches die höchste Übereinstimmung mit den erkannten Wells 13 aufweist, wobei das Modell aus dem ausgewählten Layout erhalten wird.

Die erkannten Wells 13 der Multiwellplatte 3 im Bereich 11 der Multiwellplatte 3 werden vorzugsweise als erkannte und ausgewählte dadurch erhalten, dass alle im Bildstrom 9 erkannten Wells nach einer Pixeladresse sortiert werden, und anschließend alle erkannten Wells ausgewählt werden, welche in das Pixeladressenintervall des Bereichs 11 der Multiwellplatte 3 gehören.

Ferner ist bevorzugt vorgesehen, dass der Bildstrom 9 des optischen Sensors, insbesondere Einzelbilder des Bildstroms, mittels Gaußschem Weichzeichner vorbearbeitet wird, wobei insbesondere eine Rauschreduzierung durchgeführt wird. Es ist gemäß einer bevorzugten Ausgestaltung möglich, dass der Bildstrom 9, insbesondere Einzelbilder des Bildstroms 9, aufgehellt wird, insbesondere durch eine Offset- und/oder Skalierungsoperation.

Zudem ist bevorzugt vorgesehen, dass zur Erkennung der Wells 13 der Multiwellplatte 3 gemäß Verfahrensschritt a) eine Kantenerkennung zur Erkennung von regelmäßigen Merkmalen ausgeführt wird, wobei vorzugsweise eine Bestimmung von Parametern der Kantenerkennung auf einem Median der Grauwerte des erfassten Bildstroms, insbesondere des Bereichs 11 der Multiwellplatte im Bildstrom 9, basiert, wobei vorzugsweise die Kantenerkennung mit einem Canny-Algorithmus ausgeführt wird und anschließend vorzugsweise ein Verstärken der Kanten - manchmal auch als Dilatieren bezeichnet - durchgeführt wird.

Zudem ist bevorzugt vorgesehen, dass zur Erkennung der Wells 13 der Multiwellplatte 3 gemäß Verfahrensschritt a) eine Hough-Transformation ausgeführt wird, vorzugsweise zur Identifizierung von kreisförmigen Merkmalen, insbesondere zur Erkennung von kreisförmigen Wells.

Des Weiteren ist bevorzugt vorgesehen, dass in Verfahrensschritt b1) beim Ermitteln des Modells der Multiwellplatte 3 ein Detektieren von Multiwellplattenkanten 17 in einem Multiwellplattenkantenbereich 19 der Multiwellplatte 3 im Bildstrom 9 ausgeführt wird, wobei der Multiwellplattenkantenbereich 19 in einem vorgebbaren Bereich oder in einem vorgebbaren Multiwellplattenkantenabstand zu den äußersten Wells 21 des Modells der Multiwellplatte 3 liegt.

Im Übrigen ist bevorzugt vorgesehen, dass in Schritt b1) die zur Bestimmung des relativen Wellgitters benötigten relativen 2D-Koordinaten der gemäß Verfahrensschritt a) erkannten Wells 13 durch eine rekursive Bestimmung mittels der relativen Koordinaten der benachbarten regelmäßigen Merkmale, insbesondere Nachbar-Wells des Ziel-Wells, bestimmt werden.

Im Übrigen ist bevorzugt vorgesehen, dass in Schritt b2) bei einer Bestimmung eines relativen Wellgitters des Modells der Multiwellplatte 3, insbesondere des ausgewählten Layouts der Mehrzahl an Layouts, ein Multiwellplattenkantenbereich 19 der Multiwellplatte 3 dadurch erhalten wird, dass der Multiwellplattenkantenbereich 19 ausgehend von geradlinigen Reihen von außenliegenden Wells 21, welche entweder auf erkannten Wells gemäß Verfahrensschritt a) und/oder auf durch Erweiterung des Modells erhaltenem Wells beruht, um einen zugehörigen Basisvektor 23 nach außen bezüglich der Multiwellplatte 3 verschoben wird, wobei eine - tatsächliche - Kante 25 der Multiwellplatte 3 dadurch erhalten wird, dass insbesondere geprüft wird, ob in dem Multiwellplattenkantenbereich 19 in dem Bildstrom 9 des optischen Sensors - tatsächlich - eine Kante 25 erkannt werden kann, und wobei vorzugsweise der zugehörige Basisvektor 23 auf der Basis eines geringsten und/oder mit der höchsten Häufigkeit erfassten Wellabstandes zwischen den gemäß Verfahrensschritt a) erkannten Wells oder auf der Basis eines Wellabstandes eines ausgewählten Layouts der Mehrzahl der Layouts gemäß Verfahrensschritt b2) beruht.

Beim Bestimmen der Basisvektoren 23, welche das Wellgitter 15 aufspannen, wird zunächst ein Wellabstand der erkannten Wells 13 bestimmt, anschließend werden normierte Vektoren zwischen den Kreismittelpunkten der erkannten Wells gebildet, daraufhin werden die Vektoren vorzugsweise in Hauptrichtungen, insbesondere von links nach rechts und/oder von oben nach unten - unter einem gegebenenfalls notwendigen Invertieren - ausgerichtet. Daraufhin werden vorzugsweise die normierten Vektoren nach Größe der bestimmten Wellabstände sortiert, eine Berechnung von Winkeln zwischen allen Vektoren, insbesondere Vektorpaaren, ausgeführt und kollinear aufeinanderliegende Vektoren (x,y) werden in einem Array mit x>y und eins mit y>x sortiert. Daran anschließend wird vorzugsweise eine Durchschnittsbildung einer Richtung und/oder Länge der Vektoren in den Arrays ausgeführt. Die genannten Array-Vektoren werden gegeneinander als Basisvektoren durch Abgleich von Winkeln mittels einem Winkelkriterium größer als 70° und kleiner als 110° validiert. Im Anschluss wird ein Basisvektor 23, vorzugsweise zwei nicht-kollineare, bevorzugt orthogonale Basisverktoren 23, aus einem Mittel der validierten Arrayvektoren gebildet. Vorzugsweise wird bei der Erkennung der erkannten Wells zudem der Bildstrom beziehungsweise ein Einzelbild des Bildstroms geradegerichtet, indem ein Rotationswinkel für den Bildstrom, beziehungsweise ein Einzelbild des Bildstroms, ermittelt wird und anschließend der Bildstrom, insbesondere ein Einzelbild des Bildstroms, zusammen mit den erkannten Wells 13 und Basisvektoren rotiert wird.

Insbesondere der Fig. 5 ist ein Ermitteln eines Basisvektors 23 zu entnehmen.

Um das Wellgitter 15 aufzubauen, wird zu dem Mittelpunkt eines erkannten Wells der ermittelte Basisvektor 23 - mit positivem oder negativem Vorzeichen - addiert. Hieraus erhält man einen vermuteten Mittelpunkt eines benachbarten Wells. Sodann wird innerhalb eines vorbestimmten Umkreises um den vermuteten Mittelpunkt nach einem erkannten Mittelpunkt eines erkannten Wells gesucht. Vorzugsweise wird über die quadratische Abstandsformel geprüft, ob der vermutete Mittelpunkt einem erkannten Mittelpunkt eines erkannten Wells nahe genug ist. Dieses Verfahren wird für beide orthogonale Basisvektoren in positiver und negativer Richtung durchgeführt, um alle möglichen benachbarten Wells zu finden. Auf diese Weise wird sukzessive das insbesondere relative Wellgitter 15 zusammengesetzt.

Das derart aufgebaute Wellgitter 15 wird vorzugsweise plausibilisiert, indem die Anzahlen der erkannten Reihen und Spalten mit den für einen entsprechenden Multiwellplatten-Typ hinterlegten Anzahlen verglichen wird. Wird eine größere Anzahl von Reihen und/oder Spalten erkannt, als der entsprechende Multiwellplatten-Typ aufweisen darf, werden vorzugsweise diejenigen überzähligen, am Rand angeordneten Reihen und/oder Spalten entfernt, welche die wenigsten erkannten Wells aufweisen, da diese Reihen und/oder Spalten dann unplausibel erscheinen.

Vorzugsweise werden Verbindungslinien, welche die Mittelpunkte von entlang einem Basisvektor 23 nebeneinander angeordneten Wells 13 verbinden, als Gitterlinien des Wellgitters 15 erkannt. Eine solche Gitterlinie entspricht insbesondere entweder einer Spalte oder einer Reihe von Wells 13 der Multiwellplatte 3. Solche Gitterlinien werden vorzugsweise zur Erkennung der Ränder oder Kanten 25 der Multiwellplatte 3 herangezogen. Die Kenntnis der Ränder oder Kanten 25, oder das Wissen darum, welche Gitterlinien an einem Rand der Multiwellplatte 3 liegen, ist wiederum relevant für die Ermittlung der Absolutkoordinaten der Wells 13, insbesondere wenn nicht alle Reihen und/oder Spalten von Wells 13 der Multiwellplatte 3 ermittelt werden konnten.

Um die Lage des Randes oder einer Kante 25 der Multiwellplatte 3 abzuschätzen, wird vorzugsweise eine äußere Gitterlinie um denjenigen Basisvektor 23, der senkrecht auf der Gitterlinie steht, weiter nach außen verschoben. Da die Gitterlinie parallel zum Rand verläuft, ist die Ausrichtung der Randlinie oder Kante 25 und deren Position dann zumindest ungefähr bekannt.

Sind alle Reihen und alle Spalten der Multiwellplatte 3 richtig erkannt worden, können die Absolutkoordinaten der Wells 13 ohne weiteres aus dem - relativen - Wellgitter 15 erhalten werden. Sind dagegen teilweise Wells 13 nicht erkannt worden, fehlen insbesondere ganze Spalten und/oder Reihen, muss auf der Basis weiterer Informationen entschieden werden, welche Wells 13 der erkannten Wells 13 sich am Rand der Multiwellplatte 3 befinden, um die Absolutkoordinaten ermitteln zu können. Vorzugsweise wird als Kriterium hierfür in erster Linie eine erkannte Kante 25 verwendet. Steht eine solche Kante 25 nicht zur Verfügung, wird bevorzugt die Position der äußersten erkannten Wells 13 an einem Bildrand, insbesondere am linken/rechten beziehungweise oberen/unteren Bildrand, herangezogen. Ist auch dies nicht möglich, wird als Kriterium vorzugsweise die Anzahl der erkannten Wells 13 an einer äußeren Gitterlinie herangezogen.

Die Absolutkoordinaten werden bevorzugt ausgehend von den Wells 13, die sich am Rand der Multiwellplatte 3 befinden, aus den relativen Koordinaten des relativen Wellgitters 15 unter Berücksichtigung einer vorbestimmten Zählrichtung, beispielsweise von links ausgehend aufsteigend und von oben ausgehend absteigend, ermittelt.

Schließlich wird die Absolutkoordinate des Ziel-Wells 1 abgeleitet und ausgegeben.

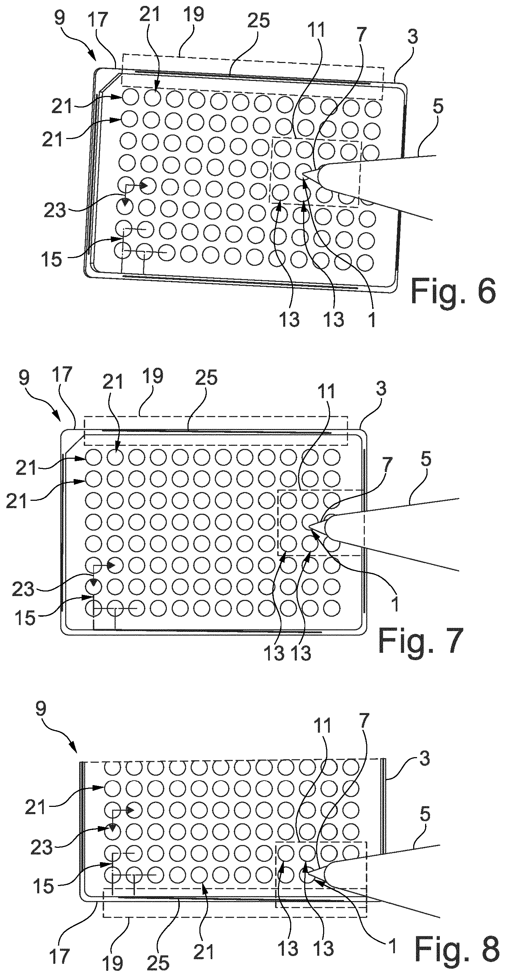

Ferner ist der **Fig. 6** ein Ermitteln einer Absolutkoordinate gemäß Verfahrensschritt b) zu entnehmen sowie ein Erkennen von Multiwellplattenkanten 17.

Der **Fig. 7** ist in einer schematischen Darstellung das Einzelbild des Bildstroms des optischen Sensors gemäß einer der Figuren 3, 4, 5 und 6 zu entnehmen, wobei gemäß Verfahrensschritt b) eine Absolutkoordinate des Ziel-Wells ermittelt wurde.

Der **Fig. 8** ist zu entnehmen, dass eine solche Ermittlung einer Absolutkoordinate - wie in Figur 6 gezeigt - auch dann durchgeführt werden kann beziehungsweise durchführbar ist, wenn im Bildstrom, insbesondere in einem Einzelbild des Bildstroms, nicht die vollständige Multiwellplatte 3 abgebildet ist.

## Patentansprüche

1. Verfahren zur Ermittlung einer Absolutkoordinate für ein Ziel-Well (1) einer Multiwellplatte (3) zur Durchführung eines Pipettiervorgangs in das Ziel-Well (1) unter Verwendung einer Dosierpipette (5), wobei das Ziel-Well (1) dasjenige Well der Multiwellplatte (3) ist, welches einer Dosierpipettenspitze (7) der Dosierpipette (5) am nächsten liegt, wobei an der Dosierpipette (5) ein optischer Sensor zur Aufnahme eines Bildstroms (9) angeordnet ist, in der Art, dass in dem Bildstrom (9) eine Umgebung der Dosierpipettenspitze (7) einschließlich der Dosierpipettenspitze (7) abgebildet wird, wobei der Bildstrom (9) auf eine Abbildung eines Bereichs (11) der Multiwellplatte (3) in dem Bildstrom (9) ausgewertet wird, und wobei die folgenden Verfahrensschritte ausgeführt werden, wenn in dem Bildstrom (9) die Abbildung eines Bereichs (11) der Multiwellplatte (3) erkannt wird:
a) Erkennen von mindestens drei, vorzugsweise acht, Wells (13) der Multiwellplatte (3) in dem abgebildeten Bereich (11) der Multiwellplatte (3),
b) Erstellen eines Modells der Multiwellplatte (3) auf der Grundlage der in Schritt a) erkannten Wells (13) und Ermitteln der Absolutkoordinate des Ziel-Wells (1) auf der Grundlage des Modells, wobei das Modell der Multiwellplatte (3) erstellt wird, indem:
b1) ein Wellgitter (15) auf die erkannten Wells (13) angewendet und vorzugsweise über die erkannten Wells (13) hinaus erweitert wird, woraus das Modell erhalten wird, wobei als Wellgitter (15) ein relatives Wellgitter des Modells der Multiwellplatte (3) angewendet wird, wobei zur Bestimmung des relativen Wellgitters benötigte relative 2D-Koordinaten der gemäß Verfahrensschritt a) erkannten Wells (13) mittels relativer Koordinaten von benachbarten regelmäßigen Merkmalen bestimmt werden, und/oder
b2) die erkannten Wells (13) mit einer Mehrzahl von Layouts von bekannten und/oder vorgebbaren Multiwellplatten verglichen werden, wobei dasjenige Layout der Mehrzahl von Layouts als ausgewähltes Layout ausgewählt wird, welches die höchste Übereinstimmung mit den erkannten Wells (13) aufweist, wobei das Modell aus dem ausgewählten Layout erhalten wird.

2. Verfahren nach Anspruch 1, **dadurch gekennzeichnet, dass** der Bildstrom (9) des optischen Sensors, insbesondere Einzelbilder des Bildstroms, mittels Gaußschem Weichzeichner vorbearbeitet wird.

3. Verfahren nach Anspruch 1 oder 2, **dadurch gekennzeichnet, dass** zur Erkennung der Wells (13) der Multiwellplatte (3) gemäß Verfahrensschritt a) eine Kantenerkennung zur Erkennung von regelmäßigen Merkmalen ausgeführt wird, wobei vorzugsweise eine Bestimmung von Parametern der Kantenerkennung auf einem Median der Grauwerte des erfassten Bildstroms, insbesondere des Bereichs (11) der Multiwellplatte im Bildstrom (9), basiert, wobei vorzugsweise die Kantenerkennung mit einem Canny-Algorithmus ausgeführt wird und anschließend vorzugsweise ein Verstärken der Kanten durchgeführt wird.

4. Verfahren nach einem der vorhergehenden Ansprüche, **dadurch gekennzeichnet, dass** zur Erkennung der Wells (13) der Multiwellplatte (3) gemäß Verfahrensschritt a) eine Hough-Transformation ausgeführt wird, vorzugsweise zur Identifizierung von kreisförmigen Merkmalen.

5. Verfahren nach einem der vorhergehenden Ansprüche, **dadurch gekennzeichnet, dass** in Verfahrensschritt b1) beim Ermitteln des Modells der Multiwellplatte (3) ein Detektieren von Multiwellplattenkanten (17) in einem Multiwellplattenkantenbereich (19) der Multiwellplatte (3) im Bildstrom (9) ausgeführt wird, wobei der Multiwellplattenkantenbereich (19) in einem vorgebbaren Bereich oder in einem vorgebbaren Multiwellplattenkantenabstand zu den äußersten Wells (21) des Modells der Multiwellplatte (3) liegt.

6. Verfahren nach einem der vorhergehenden Ansprüche, **dadurch gekennzeichnet, dass** in Schritt b1) die zur Bestimmung des relativen Wellgitters benötigten relativen 2D-Koordinaten durch eine rekursive Bestimmung mittels der relativen Koordinaten der benachbarten regelmäßigen Merkmale, insbesondere Nachbarwells des Ziel-Wells (1), bestimmt werden.

7. Verfahren nach einem der vorhergehenden Ansprüche, **dadurch gekennzeichnet, dass** in Schritt b2) bei einer Bestimmung eines relativen Wellgitters des Modells der Multiwellplatte (3), insbesondere des ausgewählten Layouts der Mehrzahl an Layouts, ein Multiwellplattenkantenbereich (19) der Multiwellplatte (3) dadurch erhalten wird, dass der Multiwellplattenkantenbereich (19) ausgehend von geradlinigen Reihen von außenliegenden Wells (21), welche entweder auf erkannten Wells (13) gemäß Verfahrensschritt a) und/oder auf durch Erweiterung des Modells erhaltenem Wells (13) beruht, um einen zugehörigen Basisvektor (23) nach Außen bezüglich der Multiwellplatte (3) verschoben wird, wobei eine Kante (25) der Multiwellplatte (3) dadurch erhalten wird, dass insbesondere geprüft wird, ob in dem Multiwellplattenkantenbereich (19) in dem Bildstrom (9) des optischen Sensor eine Kante (25) erkannt werden kann, und wobei vorzugsweise der zugehörige Basisvektor (23) auf der Basis eines geringsten und/oder mit der höchsten Häufigkeit erfassten Wellabstandes zwischen den gemäß Verfahrensschritt a) erkannten Wells (13) oder auf der Basis eines Wellabstandes eines ausgewählten Layouts der Mehrzahl der Layouts gemäß Verfahrensschritt b2) beruht.

8. Adressierungseinrichtung (27) für eine insbesondere handgeführte Dosierpipette (5) mit einer Dosierpipettenspitze (7), aufweisend einen Grundkörper (29) mit einer Dosierpipettenaufnahmevorrichtung (31), welche dazu eingerichtet ist, in einer Betriebsstellung mit einer Dosierpipette (5) verbunden zu werden, wobei der Grundkörper (29) eine Kommunikationsvorrichtung sowie einen optischen Sensor aufweist, wobei die Kommunikationsvorrichtung mit dem optischen Sensor in Wirkverbindung steht, wobei ein Fokus und/oder ein Sichtfeld des optischen Sensors in der Betriebsstellung auf die Dosierpipettenspitze (7) der Dosierpipette (5) fokussiert und/oder gerichtet ist, wobei die Adressierungseinrichtung (27) eine Auswertevorrichtung aufweist, welche mit der Kommunikationsvorrichtung in Wirkverbindung steht, wobei die Auswertevorrichtung dazu eingerichtet ist, ein Verfahren gemäß einem der zuvor genannten Ansprüche durchzuführen.

9. Adressierungseinrichtung (27) nach Anspruch 8, **dadurch gekennzeichnet, dass** die Auswertevorrichtung dem Grundkörper (29) zugeordnet ist.

## Claims

1. Method for determining an absolute coordinate for a target well (1) of a multiwell plate (3) for carrying out a pipetting process into the target well (1) using a dispensing pipette (5), wherein the target well (1) is the well of the multiwell plate (3) which is closest to a dispensing pipette tip (7) of the dispensing pipette (5), wherein an optical sensor for recording an image stream (9) is arranged on the dispensing pipette (5) in such a way that a surrounding of the dispensing pipette tip (7), including the dispensing pipette tip (7), is imaged in the image stream (9), wherein the image stream (9) is evaluated for an image of a region (11) of the multiwell plate (3) in the image stream (9), and wherein the following method steps are carried out when the image of a region (11) of the multiwell plate (3) is detected in the image stream (9):
a) detecting at least three, preferably eight, wells (13) of the multiwell plate (3) in the imaged region (11) of the multiwell plate (3),
b) creating a model of the multiwell plate (3) based on the wells (13) detected in step a) and determining the absolute coordinate of the target well (1) based on the model, wherein the model of the multiwell plate (3) is created by:
b1) applying a well grid (15) to the detected wells (13) and preferably extending it beyond the detected wells (13), from which the model is obtained, wherein a relative well grid of the model of the multiwell plate (3) is used as the well grid (15), wherein relative 2D coordinates, required for determining the relative well grid, of the wells (13) detected according to method step a) are determined by means of relative coordinates of neighbouring regular features, and/or
b2) the detected wells (13) are compared with a plurality of layouts of known and/or predefinable multiwell plates, wherein the layout from the plurality of layouts exhibiting the highest match with the detected wells (13) is selected as the selected layout, wherein the model is obtained from the selected layout.

2. Method according to claim 1, **characterised in that** the image stream (9) from the optical sensor, in particular individual frames of the image stream, is pre-processed using a Gaussian blur filter.

3. Method according to claim 1 or 2, **characterised in that**, for the detection of the wells (13) of the multiwell plate (3) according to method step a), edge detection is performed to detect regular features, wherein preferably the determination of parameters for the edge detection is based on a median of the grey values of the captured image stream, in particular the region (11) of the multiwell plate in the image stream (9), wherein the edge detection is preferably performed using a Canny algorithm and is subsequently preferably followed by edge enhancement.

4. Method according to any of the preceding claims, **characterised in that**, for the detection of the wells (13) of the multiwell plate (3) according to method step a), a Hough transform is performed, preferably for the identification of circular features.

5. Method according to any of the preceding claims, **characterised in that**, in method step b1), when determining the model of the multiwell plate (3), detection of multiwell plate edges (17) in a multiwell plate edge region (19) of the multiwell plate (3) in the image stream (9) is performed, wherein the multiwell plate edge region (19) lies within a definable region or at a definable multiwell plate edge distance from the outermost wells (21) of the model of the multiwell plate (3).

6. Method according to any of the preceding claims, **characterised in that**, in step b1), the relative 2D coordinates required to determine the relative well grid are determined by a recursive determination using the relative coordinates of the neighbouring regular features, in particular neighbouring wells of the traget well (1).

7. Method according to any of the preceding claims, **characterised in that**, in step b2), when determining a relative well grid of the model of the multiwell plate (3), in particular of the selected layout from the plurality of layouts, a multiwell plate edge region (19) of the multiwell plate (3) is obtained by shifting the multiwell plate edge region (19) outwards relative to the multiwell plate (3), starting from straight rows of outer wells (21), which are based either on detected wells (13) according to method step a) and/or on wells (13) obtained by extending the model, by a corresponding base vector (23), wherein an edge (25) of the multiwell plate (3) is obtained by, in particular, checking whether an edge (25) can be detected in the multiwell plate edge region (19) within the image stream (9) of the optical sensor, and wherein preferably the corresponding base vector (23) is based on the basis of a smallest and/or most frequently detected well distance between the wells (13) detected according to method step a) or on the basis of a well distance of a selected layout from the plurality of layouts according to method step b2).

8. Addressing unit (27) for a dispensing pipette (5), in particular a hand-held dispensing pipette, with a dispensing pipette tip (7), comprising a base body (29) with a dispensing pipette holding device (31) which is adapted to be connected to a dispensing pipette (5) in an operating position, wherein the base body (29) comprises a communication device and an optical sensor, wherein the communication device is operatively connected to the optical sensor, wherein a focus and/or a field of view of the optical sensor is, in the operating position, focused and/or directed onto the dispensing pipette tip (7) of the dispensing pipette (5), wherein the addressing unit (27) comprises an evaluation device which is operatively connected to the communication device, wherein the evaluation device is adapted to carry out a method according to any of the preceding claims.

9. Addressing unit (27) according to claim 8, **characterised in that** the evaluation device is assigned to the base body (29).

## Revendications

1. Procédé de détermination d'une coordonnée absolue pour un puits cible (1) d'une plaque multipuits (3) pour effectuer un processus de pipetage dans le puits cible (1) en utilisant une pipette doseuse (5), le puits cible (1) étant le puits de la plaque multipuits (3) qui est le plus proche d'une pointe de pipette doseuse (7) de la pipette doseuse (5), un capteur optique pour enregistrer un flux d'images (9) étant agencé sur la pipette doseuse (5) de telle sorte qu'un environnement de la pointe de pipette doseuse (7), y compris la pointe de pipette doseuse (7), est représenté dans le flux d'images (9), le flux d'images (9) étant évalué pour détecter une image d'une région (11) de la plaque multipuits (3) dans le flux d'images (9), et les étapes de procédé suivantes étant exécutées lorsque l'image d'une région (11) de la plaque multipuits (3) est reconnue dans le flux d'images (9) :
a) reconnaître au moins trois, de préférence huit, puits (13) de la plaque multipuits (3) dans la région (11) représentée de la plaque multipuits (3),
b) créer un modèle de la plaque multipuits (3) sur la base des puits (13) reconnus à l'étape a) et déterminer la coordonnée absolue du puits cible (1) sur la base du modèle, le modèle de la plaque multipuits (3) étant créé par :
b1) l'application d'une grille de puits (15) sur les puits (13) reconnus et de préférence son expansion au-delà des puits (13) reconnus, à partir de laquelle le modèle est obtenu, une grille de puits relative du modèle de la plaque multipuits (3) étant utilisée comme grille de puits (15), des coordonnées 2D relatives des puits (13) reconnus selon l'étape de procédé a) étant utilisées pour déterminer la grille de puits relative au moyen de coordonnées relatives de caractéristiques régulières voisines, et/ou
b2) la comparaison des puits (13) reconnus à une pluralité de configurations de plaques multipuits connues et/ou prédéterminables, la configuration de la pluralité de configurations étant sélectionnée comme configuration sélectionnée qui présente la correspondance la plus élevée avec les puits (13) reconnus, le modèle étant obtenu à partir de la configuration sélectionnée.

2. Procédé selon la revendication 1, **caractérisé en ce que** le flux d'images (9) du capteur optique, en particulier des images individuelles du flux d'images, est prétraité au moyen d'un flou gaussien.

3. Procédé selon la revendication 1 ou 2, **caractérisé en ce que** pour reconnaître les puits (13) de la plaque multipuits (3) selon l'étape de procédé a), une détection des bords est effectuée pour la détection de caractéristiques régulières, une détermination de paramètres de détection des bords étant basée de préférence sur une médiane des valeurs de gris du flux d'images capturé, en particulier de la région (11) de la plaque multipuits dans le flux d'images (9), la détection des bords étant exécutée de préférence avec un algorithme de Canny et un renforcement des bords étant ensuite réalisé de préférence.

4. Procédé selon l'une des revendications précédentes, **caractérisé en ce qu'** une transformation de Hough est effectuée pour identifier les puits (13) de la plaque multipuits (3) selon l'étape de procédé a), de préférence pour identifier des caractéristiques circulaires.

5. Procédé selon l'une des revendications précédentes, **caractérisé en ce qu'**au cours de l'étape de procédé b1), lors de la détermination du modèle de la plaque multipuits (3), une détection des bords de plaque multipuits (17) est effectuée dans une région de bord de plaque multipuits (19) de la plaque multipuits (3) dans le flux d'images (9), la région de bord de plaque multipuits (19) se trouvant dans une région prédéterminable ou à une distance du bord de plaque multipuits prédéterminable par rapport aux puits (21) les plus extérieurs du modèle de la plaque multipuits (3).

6. Procédé selon l'une quelconque des revendications précédentes, **caractérisé en ce que**, à l'étape b1), les coordonnées 2D relatives nécessaires à la détermination de la grille de puits relative sont déterminées par une détermination récursive au moyen des coordonnées relatives des caractéristiques régulières voisines, en particulier des puits voisins du puits cible (1).

7. Procédé selon l'une des revendications précédentes, **caractérisé en ce qu'**à l'étape b2), lors d'une détermination d'une grille de puits relative du modèle de la plaque multipuits (3), en particulier de la configuration sélectionnée parmi la pluralité de configurations, une région de bord de plaque multipuits (19) de la plaque multipuits (3) est obtenue en décalant la région de bord de plaque multipuits (19) vers l'extérieur par rapport à la plaque multipuits (3) par un vecteur de base (23) associé en partant de rangées droites de puits extérieurs (21), sur la base de puits reconnus (13) selon l'étape de procédé a) et/ou sur la base de puits (13) obtenus par expansion du modèle, un bord (25) de la plaque multipuits (3) étant obtenu en vérifiant en particuliers si un bord (25) peut être reconnu dans la région de bord de plaque multipuits (19) dans le flux d'images (9) du capteur optique, et le vecteur de base (23) associé étant de préférence basé sur un espacement de puits le plus faible et/ou détecté le plus fréquemment entre les puits (13) détectés selon l'étape de procédé a) ou basé sur un espacement de puits d'une configuration sélectionnée parmi la pluralité de configurations selon l'étape de procédé b2).

8. Dispositif d'adressage (27) pour une pipette doseuse (5), notamment portative, comportant une pointe de pipette doseuse (7), comportant un corps de base (29) avec un dispositif de réception de pipette doseuse (31), qui est conçu pour être connecté à une pipette doseuse (5) dans une position de travail, le corps de base (29) comportant un dispositif de communication et un capteur optique, le dispositif de communication étant en liaison fonctionnelle avec le capteur optique, un point focal et/ou un champ de vision du capteur optique en position de travail étant focalisé et/ou dirigé sur la pointe de pipette doseuse (7) de la pipette doseuse (5), le dispositif d'adressage (27) présentant un dispositif d'évaluation qui est en liaison fonctionnelle avec le dispositif de communication, le dispositif d'évaluation étant configuré pour mettre en œuvre un procédé selon l'une des revendications précédentes.

9. Dispositif d'adressage (27) selon la revendication 8, **caractérisé en ce que** le dispositif d'évaluation est associé au corps de base (29).
